# EUROPÄISCHE PATENTSCHRIFT

(11) **EP 1 106 418 B1**
(45) Veröffentlichungstag und Bekanntmachung des Hinweises auf die Patenterteilung: **29.05.2013**
(21) Anmeldenummer: 00124013.4
(22) Anmeldetag: 04.11.2000
(51) Int. Cl.: B60K 35/00, B60K 37/02

(54) **Verfahren und Vorrichtung zur optischen Anzeige von Informationen in Kraftfahrzeugen**
Method and apparatus of optically indicating informations in motor vehicles
Procédé et dispositif de visualisation d'informations en automobiles

(30) Priorität: 10.12.1999 DE 19959597
(43) Veröffentlichungstag der Anmeldung: 13.06.2001
(73) Patentinhaber: Bayerische Motoren Werke Aktiengesellschaft, 80809 München (DE)
(72) Erfinder: Künzner, Hermann, 85356 Freising (DE)

(56) Entgegenhaltungen:
- EP-A- 0 846 588
- DE-A- 3 346 370
- DE-A- 19 539 799
- DE-U- 9 106 762

## Beschreibung

Die Erfindung bezieht sich auf ein Verfahren und eine Vorrichtung zur optischen Anzeige von Informationen in Kraftfahrzeugen nach dem Oberbegriff des Patentanspruchs 1 bzw. 4.

Ein derartiges Verfahren und eine derartige Vorrichtung sind beispielsweise aus der DE 39 36 373 A1 bekannt. Hierbei werden beispielsweise die Informations-Paare Kraftstoffvorrat und Momentanverbrauch oder Kraftstoffvorrat und Reichweite gleichzeitig in einer einzigen Darstellung im Sinne einer Differenzbildung gegenübergestellt. Zwar ergibt sich durch diese gleichzeitige, vergleichende Darstellung von mindestens zwei miteinander in einem Wirkungszusammenhang stehenden informationen ein synergetischer Effekt, durch den sich für den Fahrer über die bloße Auflistung von Informationen hinaus Zusatzinformationen erschließen, jedoch können ggf. zuviele Informationen auf zu kleinem Raum erscheinen.

Weiterhin stellen bisherige Instrumentenkombinationen (auch sog. Kombiinstrumente oder Anzeigetafeln) im Bereich des Armaturenbrettes in Kraftfahrzeugen Informationen, wie z. B. Drehzahl, Geschwindigkeit, Verbrauch, Tankinhalt, Reichweite usw., entweder durch Zeiger oder durch ein Display gleichzeitig an. Wenn ein Display verwendet wird, können insbesondere im Zusammenhang mit einem Bordcomputer durch die Betätigung eines Bedienelements, z. B. eines Druckschalters, verschiedene Informationen des Bordcomputers nacheinander zur Anzeige gebracht werden. Hierbei werden die Informationen nur auf manuellen Abruf hin nach vorgegebener Reihenfolge ohne inhaltliche Ordnung, meist durch Text, einzeln dargestellt. Der nächstliegende bekanntgewordene Stand der Technik ist der DE9106762U zu entnehmen.

Es ist Aufgabe der Erfindung, ein Verfahren und eine Vorrichtung eingangs genannter Art im Hinblick auf ergonomische Anforderungen zu verbessern. Insbesondere soll der Fahrer einerseits möglichst gut über sein Fahrzeug informiert werden, andererseits aber nicht durch zu viele Informationen auf zu engem Raum überfordert werden.

Diese Aufgabe wird durch die Merkmale des Patentanspruchs 1 bzw. 4 verfahrensmäßig bzw. vorrichtungsmäßig gelöst.

Vorteilhafte Weiterbildungen der Erfindung sind die Gegenstände der abhängigen Patentansprüche.

Mittels des erfindungsgemäßen Verfahrens und der erfindungsgemäßen Anzeigevorrichtung, die insbesondere ein elektronisches Steuergerät und ein durch das Steuergerät elektronisch ansteuerbares Display enthält, wird das Display vom Steuergerät automatisch oder manuell derart angesteuert, daß mindestens zwei miteinander in einem Wirkungszusammenhang stehende Informationen durch graphische Darstellung im Vergleich angezeigt werden, wobei die Informationen am selben Ort im Wechsel nacheinander mit derselben Grafik, d. h. mit derselben Darstellungsart, aber mit unterschiedlicher Beschriftung angezeigt werden. Die Grafik erscheint an derselben Stelle des Displays. Der Wechsel findet beispielsweise in vorgegebenen Zeitabschnitten statt oder durch Betätigen eines Tasters je nach Nutzerwunsch.

In einem Wirkungszusammenhang stehende Informationen sind beispielsweise die Werte-Paare Reichweite/Distanz, Momentanverbrauch/Durchschnittsverbrauch, Tankinhalt/Reichweite, Gesamtfahrzeit/zurückgelegte Fahrzeit.

Zusätzlich können weitere Informationen gleichzeitig (z. B. unterhalb oder innnerhalb der graphischen Darstellung der im Wechsel angezeigten Informationen) angezeigt werden.

Vorzugsweise werden die Informationen durch Balkendarstellung angezeigt.

Die unterschiedlichen Informationen können mit unterschiedlicher Färbung oder Beleuchtungsstärke (hell/dunkel) angezeigt werden.

Durch die vergleichende Darstellung zweier oder mehrerer in einem Wirkungszusammenhang stehender Informationen können vom Fahrer sehr schnell auf einen Blick zusätzliche Informationen, wie z. B. "der Tankinhalt ist für die Gesamtfahrzeit ausreichend" oder "bei Beibehalten des Fahrstils steigt der Durchschnittsverbrauch", erfaßt werden. Hierdurch wird die Konzentration des Fahrers vom Fahrgeschehen so wenig wie möglich abgelenkt. Durch die abwechselnde Darstellung der Informationen erscheint das Display übersichtlicher. Da die Informationen in einem Wirkungszusammenhang stehen, kann der Fahrer den abwechselnd angezeigten Informationen gut folgen und deren Bedeutung leicht erfassen.

In der Zeichnung sind Ausführungsbeispiele der Erfindung dargestellt. Es zeigen
- Fig. 1: eine erfindungsgemäße im Wechsel vergleichende Darstellung von Informationen am Beispiel der Informationen Tankinhalt und Reichweite
- Fig. 2: eine erfindungsgemäße im Wechsel vergleichende Darstellung von Informationen am Beispiel der Informationen Reichweite und Distanz
- Fig. 3: eine erfindungsgemäße im Wechsel vergleichende Darstellung von Informationen am Beispiel der Informationen Momentan-Verbrauch und Durchschnitts-Verbrauch

Ergänzend wird daraufhingewiesen, daß die vergleichende Darstellung von Informationen nicht auf die Darstellung von nur zwei Informationen beschränkt ist.

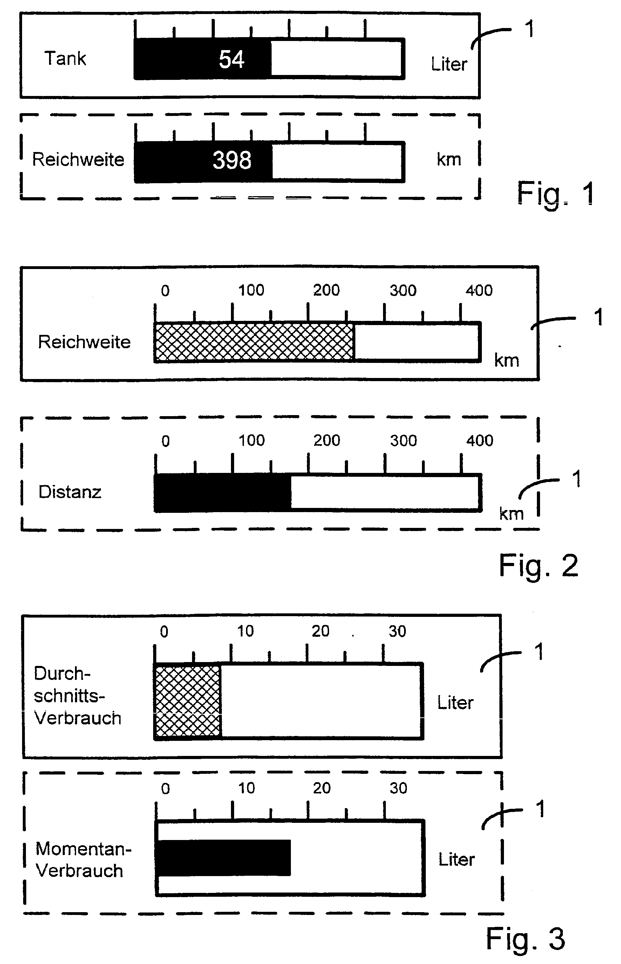

In Fig. 1 werden die Informationen Tankinhalt (Tank) und Reichweite im Wechsel nacheinander am selben Ort eines Displays 1 angezeigt. Ein Wechsel der Anzeige kann beispielsweise zeitgesteuert, z. B. alle 5 sec, oder manuell z. B. durch Betätigen eines Tasters nach Nutzerwunsch erfolgen. Dabei kann über einen in axialer Richtung zu betätigenden Taster am Lenkstockhebel eine Anzeige im Kombiinstrument durchgeschaltet werden. Durch Betätigen des Tasters erfolgt also eine unterschiedliche Beschriftung des Tankinhalt-Balkens (in Litern bzw. in Kilometern). Dabei wird dieselbe Graphik, nämlich dunkler Balken auf hellem Hintergrund, jeweils mit unterschiedlicher Beschriftung der Informationen und ihrer Einheiten (Liter (1) oder km) verwendet. Eine derartige Darstellung ist besonders bei einem sehr schmalen Display vorteilhaft. Im dargestellten Beispiel wird einmal der Tankinhalt in Form des Balkens mit der Beschriftung des tatsächlichen Tankinhalts in Litern und einmal die Reichweite mit der Beschriftung der aktuellen Reichweite in km angezeigt. Da sich die Balkenlänge beim Wechsel der Anzeige nicht verändert, ist eine quasikontinuierliche Anzeige des Tankinhalts gegeben.

Gemäß Fig. 2 werden die zwei miteinander in einem kraftstoffverbrsuchsbezogenen Wirkungszusammenhang stehenden Informationen Reichweite und Distanz durch graphische Balkendarstellung im Wechsel am selben Ort auf einem Display 1 angezeigt. Die Reichweite gibt an, wieviele Kilometer das Fahrzeug mit dem momentan vorliegenden Tankinhalt bei in etwa gleichbleibendem Fahrstil bzw. Verbrauch ohne Nachtanken noch zurücklegen kann. Die Distanz gibt an, wieviele Kilometer noch bis zum eingegebenen Ziel verbleiben. Voraussetzung hierfür ist z. B. ein Bordcomputer oder ein Navigationssystem. Zusätzlich ist der Balken für die Darstellung der Reichweite heller als der Balken für die Darstellung der Distanz. Durch diese unterschiedliche Beleuchtungsstärke wird die Distanz als wichtigere der beiden Informationen besonders hervorgehoben. Im vorliegenden Fall reicht der vorhandene Kraftstoff im Tank bis zum Ziel aus, wenn der Fahrstil bzw. der Verbrauch in etwa gleich bleibt. Diese Zusatzinformation erfaßt der Fahrer durch einen kurzen Blick auf die erfindungsgemäße Anzeigevorrichtung, ohne zahlenmäßige Überlegungen anstellen zu müssen.

In Fig. 3 wird eine weitere Darstellungsmöglichkeit am Beispiel der Informationen Momentanverbrauch und Durchschnittsverbrauch entsprechend der Erfindung gezeigt. Der Momentanverbrauch wird durch den dunklen schmalen Balken, der Durchschnittsverbrauch durch den helleren breiten Balken angezeigt. Hierbei kann die Wechselfrequenz bei Bedarf so stark erhöht werden, daß sich für das Auge scheinbar eine gleichzeitige Darstellung der beiden Informationen ergibt. Taucht dadurch bei schneller abwechselnder Darstellung der beiden Informationen am selben Ort der dunkle schmale Balken pfeilförmig aus dem hellen Balken heraus, ergibt sich für den Fahrer auf einen Blick die Zusatzinformation, daß sich bei Beibehalten des momentanen Fahrstils längerfristig der Durchschnittsverbrauch erhöhen und damit die Reichweite verringern wird.

Durch ein Zeitlimit oder einen Resetknopf kann die Neuberechnung der Informationen bzw. Werte, z. B. bei Fahrtantritt, gestartet werden. Denkbar ist dabei ein Zurücksetzen einzelner Werte oder ein allgemeiner Reset aller relevanten Werte für eine Reise.

## Patentansprüche

1. Verfahren zur optischen Anzeige von Informationen in Kraftfahrzeugen mittels eines elektronisch ansteuerbaren Displays, wobei das Display derart angesteuert wird,
dass mindestens zwei miteinander in einem Wirkungszusammenhang stehende Informationen durch graphische Darstellung im Vergleich angezeigt werden,
dass, die Informationen am selben Ort im Wechsel nacheinander mit derselben Grafikart, aber mit unterschiedlicher Beschriftung angezeigt werden, und **dadurch gekennzeichnet**
**dass** die zwei im Wirkzusammenhang stehenden Informationen gebildet sind durch Reichweite und Distanz oder Momentanverbrauch und Durchschnittsverbrauch oder Tankinhalt und Reichweite oder Gesamtfahrzeit und zurückgelegte Fahrzeit.

2. Verfahren nach Patentanspruch 1, **dadurch gekennzeichnet, dass** die Informationen durch Balkendarstellung angezeigt werden.

3. Verfahren nach Patentanspruch 1 oder 2, **dadurch gekennzeichnet, dass** die Informationen mit unterschiedlicher Färbung oder Beleuchtungsstärke (hell/dunkel) angezeigt werden.

4. Anzeigevorrichtung zur optischen Anzeige von Informationen in Kraftfahrzeugen mit einem elektronisch ansteuerbaren Display, bei der Mittel vorgesehen sind, die das Display derart ansteuern,
dass mindestens zwei miteinander in einem Wirkungszusammenhang stehende Informationen durch graphische Darstellung im Vergleich angezeigt werden,
dass, die Informationen am selben Ort im Wechsel nacheinander mit derselben Grafikart, aber mit unterschiedlicher Beschriftung angezeigt werden, und **dadurch gekennzeichnet**
**dass** die zwei im Wirkzusammenhang stehenden Informationen gebildet sind durch Reichweite und Distanz oder Momentanverbrauch und Durchschnittsverbrauch oder Tankinhalt und Reichweite oder Gesamtfahrzeit und zurückgelegte Fahrzeit.

5. Anzeigevorrichtung nach Patentanspruch 4, **dadurch gekennzeichnet, dass**. die Informationen durch Balkendarstellung angezeigt werden

6. Anzeigevorrichtung nach Patentanspruch 4 oder 5, **dadurch gekennzeichnet, dass** die Informationen mit unterschiedlicher Färbung oder Beleuchtungsstärke (hell/dunkel) angezeigt werden.

## Claims

1. A method for optical communication of information in motor vehicles, using an electronically actuatable display, the display being so actuated that
at least two operatively connected messages are graphically compared,
the messages are displayed at the same place, alternately in succession, with the same graphics but with different lettering, and **characterised in that**
the two operatively connected messages are in the form of range and distance or instantaneous consumption and average consumption or tank contents and range or total driving time and elapsed driving time.

2. A method according to claim 1, **characterised in that** the messages are displayed in bar-chart form.

3. A method according to claim 1 or claim 2, **characterised in that** the messages are displayed in various colours or variations in brightness(bright/dark).

4. A device for optical display of information in motor vehicles, using an electronically actuatable display, wherein means are provided which so actuate the display that
at least two operatively connected messages are graphically compared,
the messages are displayed in the same place, alternately and successively, with the same graphics but with different lettering, and **characterised in that**
the two operatively connected messages are in the form of range and distance or instantaneous consumption and average consumption or tank contents and range or total driving time and elapsed driving time.

5. A display device according to claim 4, **characterised in that** the messages are displayed in bar-chart form.

6. A display device according to claim 4 or claim 5, **characterised in that** the information is displayed in various colours or with varying brightness (bright/dark).

## Revendications

1. Procédé d'affichage optique d'informations dans des véhicules automobiles à l'aide d'un affichage à commande électronique, l'affichage étant commandé pour :
- afficher par comparaison au moins deux informations en relation l'une avec l'autre par une représentation graphique,
- afficher les informations au même endroit en alternance l'une avec l'autre avec le même type de graphisme mais avec des inscriptions différentes,
procédé **caractérisé en ce que**
- les deux informations en relation sont la portée et la distance ou la consommation instantanée et la consommation moyenne ou le contenu du réservoir et la portée ou le temps de parcours total et le temps de parcours passé.

2. Procédé selon la revendication 1,
**caractérisé en ce que**
les informations sont affichées sous la forme de barres.

3. Procédé selon la revendication 1 ou 2,
**caractérisé en ce que**
les informations sont affichées avec une couleur ou une intensité d'éclairage (clair/sombre) différentes.

4. Dispositif d'affichage pour l'affichage optique d'informations dans des véhicules automobiles à l'aide d'un afficheur à commande électronique comportant des moyens commandant l'affichage pour :
- afficher par comparaison au moins deux informations en relation l'une avec l'autre par une représentation graphique,
- afficher les informations au même endroit en alternance l'une avec l'autre avec le même graphisme mais avec des inscriptions différentes,
dispositif **caractérisé en ce que**
les deux informations en relation sont la portée et la distance ou la consommation instantanée et la consommation moyenne ou le contenu du réservoir et la portée ou le temps de parcours total et le temps de parcours passé.

5. Dispositif d'affichage selon la revendication 4,
**caractérisé en ce que**
les informations sont affichées sous la forme de barres.

6. Dispositif d'affichage selon l'une des revendications 4 ou 5,
**caractérisé en ce que**
les informations sont affichées avec des couleurs et des intensités d'éclairage (clair/sombre) différentes.
